# EUROPÄISCHE PATENTSCHRIFT

(11) **EP 2 131 009 B1**
(45) Veröffentlichungstag und Bekanntmachung des Hinweises auf die Patenterteilung: **21.09.2016**
(21) Anmeldenummer: 09161666.4
(22) Anmeldetag: 02.06.2009
(51) Int. Cl.: E06B 9/323, E06B 9/42, E06B 9/56, F16B 2/24

(54) **Befestigungsklipp für ein Tragprofil**
Attachment clip for a support profile
Clip de fixation pour un profil de support

(30) Priorität: 02.06.2008 DE 202008007333 U
(43) Veröffentlichungstag der Anmeldung: 09.12.2009
(73) Patentinhaber: Hunter Douglas Industries Switzerland GmbH, 6006 Luzern (CH)
(72) Erfinder: Gramsch, Wilfried, 27616 Beverstedt (DE)
(74) Vertreter: Tappe, Udo

(56) Entgegenhaltungen:
- DE-U1-202006 004 608

## Beschreibung

Die Erfindung betrifft einen Befestigungsklipp für ein Tragprofil, insbesondere eine Rollokassette, einer Verschattungsanlage mit einer Basis zum Anlegen an eine Befestigungsfläche, wobei die Basis eine erste Anlagefläche mit einer Befestigungsöffnung und eine zweite Anlagefläche aufweist, mit voneinander abgewandten Enden der Basis, denen Haltelaschen zum Erfassen des Tragprofils zugeordnet sind, wobei eine erste Haltelasche der ersten Anlagefläche zugeordnet ist und eine zweite Haltelasche, die mit einer Greiflasche versehen ist, der zweiten Anlagefläche zugeordnet ist, und mit einer Sicke, die die erste Anlagefläche mit der zweiten Anlagefläche verbindet.

Ein solcher Befestigungsklipp ist aus der DE 10 2005 052 600 A1 bekannt. Bei dem bekannten Befestigungsklipp ist von Nachteil, dass zum Befestigen des Tragprofils an dem Befestigungsklipp das Tragprofil grundsätzlich zunächst in die zweite Haltelasche eingeführt werden muss, um sodann in die erste Haltelasche eingeklippt zu werden. Hierdurch wird eine deckennahe Montage des Tragprofils verhindert. Unter einer solchen deckennahen Montage ist eine Anordnung des Tragprofils an einer Gebäudefläche, beispielsweise einer Wand, direkt unterhalb einer Decke zu verstehen, so dass das Tragprofil im montierten Zustand entweder gerade noch keinen Kontakt mit der Decke hat oder an der Decke anliegt. Eine derartige deckennahe Montage ist mit den Befestigungsklipps nach dem Stand der Technik nicht realisierbar.

Der Befestigungsklipp ist einerseits derart an der Wand montierbar, dass die zweite Haltelasche mit der Greiflasche der Decke zugewandt ist. In diesem Fall ergibt sich jedoch aufgrund der in der Regel über das Tragprofil hinausragenden Greiflasche, dass ein sichtbarer Spalt zwischen dem Tragprofil und der Decke entsteht. Die Greiflasche steht gegenüber dem Tragprofil hervor, um eine Betätigung der Greiflasche zum Lösen des Tragprofils aus dem Befestigungsklipp zu ermöglichen.

Ein solcher Lichtspalt ergibt sich jedoch andererseits auch dann, wenn der Befestigungsklipp mit einer abgewandt von der Decke angeordneten Greiflasche an der Wand montiert ist. Auch in diesem Fall ist der Befestigungsklipp nicht direkt unterhalb der Decke montierbar. Dies ist nicht realisierbar, weil das Tragprofil zunächst in die der Decke zugewandten ersten Haltelasche eingeführt werden muss. Hierzu muss das Tragprofil schräg in die erste Haltelasche eingeführt werden. Aufgrund dieser schrägen Einführung wird ein der Wand abgewandter und der Decke zugewandter Bereich des Tragprofils in die Richtung der Decke und über das Höhenniveau der ersten Haltelasche hinaus verschwenkt. Beim anschließenden Einklippen in die zweite Haltelasche wird dieser Bereich des Tragprofils wieder von der Decke weg verschwenkt. Der für die Verschwenkung benötigte Raum zwischen dem Befestigungsklipp und der Decke führt im montierten Zustand zu einem sichtbaren Spalt zwischen dem Tragprofil und der Decke.

Darüber hinaus ist bei den bekannten Befestigungsklipps nur eine einseitige Montage realisierbar. Die Montage erfolgt grundsätzlich derart, dass das Tragprofil zunächst in die erste Haltelasche eingeführt und sodann in die zweite Haltelasche eingeklippt wird. Zum Lösen des Tragprofils von dem Befestigungsklipp wird das Tragprofil zunächst mit Hilfe der Greiflasche von der zweiten Haltelasche gelöst, um das Tragprofil sodann aus der ersten Haltelasche zu lösen. Hieraus ergibt sich der Nachteil, dass der Monteur, beispielsweise bei einer Montage des Tragprofils an einer Wand, das Tragprofil zunächst in die der Decke zugewandten oberen ersten Haltelasche einführen muss und sowohl hierbei als auch bei dem nachfolgenden Einklippen in die zweite Haltelasche das gesamte Gewicht des Tragprofils halten muss. Zudem muss der Monteur zusätzlich zum Halten des Tragprofils eine gleichmäßige und kontrollierte Verschwenkbewegung durchführen, um das Tragprofil in den Befestigungsklipp einzuklippen. Bei der Montage und Installation größerer Tragprofile kann es daher notwendig sein, dass mehrere Monteure erforderlich sind. Bei der Montage des Tragprofiles unter der Decke werden die raumseitigen Haltelaschen häufig vollständig verdeckt. Aus diesem Grund müssen die Greiflaschen wandseitig angeordnet werden, um zugänglich zu bleiben. Bei der Montage lassen sich die ersten Haltelaschen dann nur schwer treffen, da sie von dem Tragprofil verdeckt werden.

Darüber hinaus ist aus dem Dokument DE 20 2006 004 608 U1 ein Befestigungsklipp mit lediglich einer einzigen Anlagefläche bekannt. Hierbei ist ein komplexer Aufbau mit einem rechtwinklig zu Anlagefläche ausgerichtetem Federschenkel notwendig, die wiederum eine Federlasche aufweist.

Daher ist es das der Erfindung zugrunde liegende Problem, einen Befestigungsklipp der eingangs genannten Art derart weiterzuentwickeln, dass einerseits eine deckennahe Montage möglich ist und andererseits das Einklippen des Tragprofils in den Befestigungsklipp erleichtert wird.

Das der Erfindung zugrunde liegende Problem wird durch einen Befestigungsklipp nach dem vorliegenden Anspruch 1 gelöst, wobei die erste Haltelasche ein Sicherungselement zum zusätzlichen Fixieren des Tragprofils aufweist und dass an der von der ersten Anlagefläche abgewandten Seite der ersten Haltelasche eine Einführunterstützung für das Tragprofil angeordnet ist.

Aufgrund der Einführunterstützung an der von der ersten Anlagefläche abgewandten Seite der ersten Haltelasche ist ein beidseitiges Einklippen des Tragprofils in den Befestigungsklipp realisierbar. Dies bedeutet, dass einerseits das Tragprofil zunächst in die erste Haltelasche einführbar und sodann in die zweite Haltelasche einklippbar ist. Andererseits ist ein alternativer Einklippvorgang durchführbar, bei dem das Tragprofil zunächst in die zweite Haltelasche einführbar ist, um sodann in die erste Haltelasche eingeklippt zu werden. Der letztgenannte Einklippvorgang ermöglicht eine deckennahe Montage des Befestigungsklipps und des Tragprofils. Das Lösen des Tragprofils von dem Befestigungsklipp erfolgt, indem das Tragprofil zunächst mit Hilfe der Greiflasche aus der zweiten Haltelasche gelöst und sodann aus der ersten Haltelasche entnommen wird.

Somit ist zum einen eine deckennahe Montage des Tragprofils an einer Befestigungsfläche, beispielsweise einer Wand und unmittelbar unterhalb einer Decke, realisierbar. Zusätzlich ist die Montage erheblich erleichtert, da das Tragprofil, beispielsweise bei einer Montage an einer Wand, zunächst in die zweite Haltelasche einführbar ist und hierdurch das Gewicht des Tragprofils bereits von dem Befestigungsklipp aufgenommen wird. Ab diesem Zeitpunkt muss der Monteur das Gewicht des Tragprofils nicht mehr tragen. Es muss lediglich ein Herauskippen aus der zweiten Haltelasche verhindert werden. Zur endgültigen Befestigung des Tragprofils an dem Befestigungsklipp muss das Tragprofil durch den Monteur lediglich derart verschwenkt werden, dass das Tragprofil in der ersten Haltelasche einklippt.

Weiter ist von Vorteil, dass die erste Haltelasche ein Sicherungselement zum zusätzlichen Fixieren des Tragprofils aufweist, wodurch das Tragprofil in der ersten Haltelasche besonders sicher gehalten ist und die Gefahr eines unbeabsichtigtes Lösens deutlich reduziert wird. Zudem ist der Befestigungsklipp dazu geeignet, auch schwerere Elemente, wie beispielsweise eine Rollokassette, sicher und zuverlässig zu halten.

Nach einer Weiterbildung ist das Sicherungselement in einer Aussparung der ersten Haltelasche angeordnet. Dies ermöglicht eine Platz und Material sparende Anordnung des Sicherungselements. Vorzugsweise ist das Sicherungselement als ein Vorsprung, Widerhaken oder eine Nase ausgebildet. Ein derartig ausgestaltetes Sicherungselement ist einfach herzustellen und gewährleistet eine zuverlässige zusätzliche Fixierung des Tragprofils an dem Befestigungsklipp. Vorteilhafterweise hintergreift das Sicherungselement einen Steg des Tragprofils. Somit ist ein effektives Zusammenwirken des Sicherungselementes mit dem Tragprofil gewährleistet, wobei das Sicherungselement das Tragprofil durch das Hintergreifen des Steges zusätzlich festklemmt.

Entsprechend einer weiteren Ausführungsform ist die Einführunterstützung als eine schräg zur Basis verlaufende Gleitfläche ausgebildet. Der Bereich der zweiten Haltelasche ist aufgrund der Greiflasche und/oder der Sicke im Vergleich zur ersten Haltelasche elastischer gestaltet, wodurch ein Einführen in die zweite Haltelasche erleichtert ist. Die erste Haltelasche ist dagegen steifer ausgebildet, was einen insgesamt sicheren Halt des Tragprofils in dem Befestigungsklipp gewährleistet. Andererseits erschwert dies jedoch ein Einklippen des Tragprofils in die erste Haltelasche, wenn das Tragprofil zuvor in die zweite Haltelasche eingeführt worden ist. Das Einklippen in die erste Haltelasche wird durch die Einführunterstützung ermöglicht, wobei während des Einklippens eine Kante des Tragprofils über die Gleitfläche in die erste Haltelasche gleitet. Die Gleitfläche erleichtert dabei den Übergang in den eingeklippten Montagezustand.

Vorzugsweise geht die erste Haltelasche über eine Biegung, in die, insbesondere nach außen oder innen gerichtete, Gleitfläche über. Die Biegung erlaubt einen allmählichen Übergang von der Gleitfläche in die erste Haltelasche und erleichtert somit das Einklippen des Tragprofils in den Befestigungsklipp. Die erste Haltelasche und die zweite Haltelasche können das Tragprofil, insbesondere mittels eines Bogenelementes, von außen oder innen erfassen. Hiervon abhängig ist die Gleitfläche nach außen oder innen gerichtet.

Gemäß einer Weiterbildung sind die erste Anlagefläche und die zweite Anlagefläche in der gleichen Ebene angeordnet. Dies erlaubt eine flache Bauweise des Befestigungsklipps und verhindert die Entstehung eines Lichtspaltes zwischen dem montierten Tragprofil und der Befestigungsfläche.

Nach einer weiteren Ausführungsform ist die erste Haltelasche unmittelbar mit der Basis verbunden. Somit sind keine zusätzlichen federnden Elemente zwischen der ersten Haltelasche und der Basis vorgesehen, was zu einer relativ großen Steifigkeit des Befestigungsklipps im Bereich der ersten Haltelasche führt. Hierdurch wird der feste Halt des Tragprofils in der ersten Haltelasche erhöht.

Vorzugsweise ist der Abstand zwischen der ersten Haltelasche und der Sicke größer als der Abstand zwischen der Sicke und der zweiten Haltelasche, insbesondere etwa doppelt so groß. Dies führt dazu, dass der Befestigungsklipp im Bereich der zweiten Haltelasche elastischer ausgestaltet ist, während der Befestigungsklipp im Bereich der ersten Haltelasche steifer ist. Dies erleichtert einerseits das Ein- und Ausführen des Tragprofils in die zweite Haltelasche und führt andererseits zu einer größeren Steifigkeit des Befestigungsklipps im Bereich der ersten Haltelasche. Hierdurch ist im Bereich der ersten Haltelasche ein sicherer Halt des Tragprofils in der ersten Haltelasche und damit am Befestigungsklipp gewährleistet.

Gemäß einer Weiterbildung ist die Befestigungsöffnung als ein Langloch ausgebildet. Hierdurch ergibt sich die Möglichkeit Fertigungstoleranzen und leichte Abweichungen von Befestigungsbohrungen in der Befestigungsfläche auszugleichen Hierbei wird der Befestigungsklipp mittels Verbindungsmitteln, wie beispielsweise Schrauben oder Nägeln, unter Verwendung der Befestigungsöffnung an der Befestigungsfläche montiert.

Vorzugsweise ist die Sicke im Wesentlichen U-förmig ausgebildet. Die Sicke führt einerseits zu einer erhöhten Elastizität des Befestigungsklipps im Bereich der zweiten Haltelasche, wodurch das Einsetzen und Lösen des Tragprofils erleichtert wird. Andererseits kann die Sicke dazu dienen, Fertigungstoleranzen des Tragprofils und/oder des Befestigungsklipps auszugleichen. Derartige Fertigungstoleranzen können sich beispielsweise aufgrund des Herstellungsprozesses und/oder aufgrund von Beschichtungen ergeben. Zum Ausgleich der Fertigungstoleranzen kann sich die Sicke je nach Anforderung in einem öffnenden oder schließenden Sinne auf- bzw. zubiegen. Ferner kann sich die Sicke zum Ausgleich größerer Fertigungstoleranzen ggf. auch plastisch verformen.

Von besonderem Vorteil ist eine Verschattungsanlage, insbesondere ein Rollo, mit einem Tragprofil, vorzugsweise einer Rollokassette, wobei das Tragprofil mittels eines erfindungsgemäßen Befestigungsklipps an einer Gebäudefläche montiert ist.

Nachfolgend wird die Erfindung anhand eines Ausführungsbeispiels mittels der folgenden Zeichnungen näher erläutert. Es zeigen:
- Fig. 1: eine Draufsicht eines erfindungsgemäßen Befestigungsklipps und
- Fig. 2: eine Seitenansicht des Befestigungsklipps gemäß Figur 1.

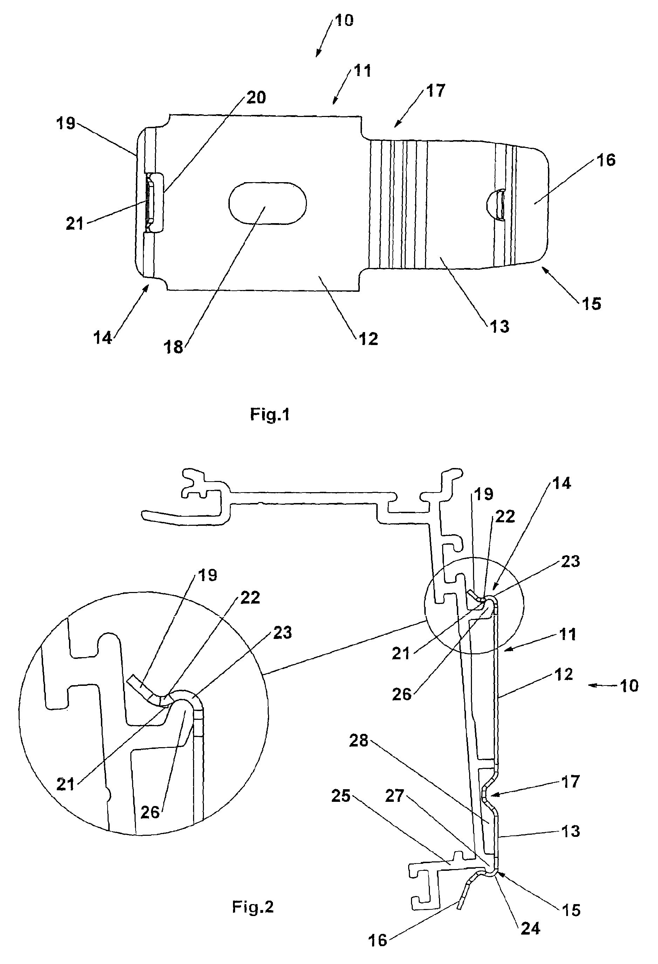

Fig. 1 zeigt eine Draufsicht auf einen Befestigungsklipp 10 mit einer Basis 11 zum Anlegen an eine nicht näher dargestellte Befestigungsfläche. Der Befestigungsklipp 10 ist einstückig aus einem Blechmaterial mittels geeigneter Stanz- und Biegeverfahren hergestellt. Die Basis 11 weist eine erste Anlagefläche 12 und eine zweite Anlagefläche 13 auf. Hierbei besitzt die erste Anlagefläche 12 eine etwa doppelt so große Fläche wie die zweite Anlagefläche 13. An der ersten Anlagefläche 12 ist eine erste Haltelasche 14 angeordnet, während an der zweiten Anlagefläche 13 eine zweite Haltelasche 15 vorgesehen ist. Hierbei weist die zweite Haltelasche 15 eine Greiflasche 16 auf.

Die erste Anlagefläche 12 ist mit der zweiten Anlagefläche 13 mittels einer Sicke 17 verbunden. Weiter weist die erste Anlagefläche 12 eine Befestigungsöffnung 18 auf, wobei die Befestigungsöffnung 18 als ein Langloch 18 ausgebildet ist. Somit kann der Befestigungsklipp 10 mittels einer Schraubverbindung unter Verwendung des Langlochs 18 in an sich bekannter Weise an einer Gebäudefläche befestigt werden. Es ist aber auch möglich anstelle der Befestigungsöffnung 18 andere geeignete Befestigungsmittel vorzusehen. Die erste Haltelasche 14 weist an ihrer von der ersten Anlagefläche 12 abgewandten Seite eine Einführunterstützung 19 auf. Hierbei ist die Einführunterstützung 19 als eine schräg zur Basis 11 verlaufende Gleitfläche 19 ausgebildet. Des Weiteren weisen die erste Anlagefläche 12 und die erste Haltelasche 14 eine gemeinsame, im Wesentlichen rechteckig gestaltete, Aussparung 20 auf. Ausgehend von der Gleitfläche 19 ragt ein Sicherungselement 21 in die Aussparung 20 hinein. Das Sicherungselement 21 ist als ein Vorsprung 21 ausgebildet.

Fig. 2 zeigt eine Seitenansicht des Befestigungsklipps 10 gemäß Fig. 1. Hiernach geht die nach außen gerichtete Gleitfläche 19 mittels einer Biegung 22 in die erste Haltelasche 14 über. Die erste Haltelasche 14 wiederum weist ein Bogenelement 23 auf, welches im Wesentlichen einem Bogenelement 24 der zweiten Haltelasche 15 entspricht.

In den Befestigungsklipp 10 ist ein Tragprofil 25 eingeklippt. Das Tragprofil 25 weist einen Steg 26 und einen Steg 27 auf. Der Steg 26 wird von dem Bogenelement 23 von außen erfasst. Entsprechend wird der Steg 27 von dem Bogenelement 24 ebenfalls von außen erfasst. Hierdurch wird das Tragprofil 25 in dem Befestigungsklipp 10 gehalten. Weiter weist das Tragprofil 25 eine Nut 28 auf, in der die Sicke 17 aufgenommen wird.

Die Greiflasche 16 ist nach außen und von dem Tragprofil 25 weg gerichtet und ragt über das Tragprofil 25 hinaus nach außen hin ab. Hierdurch ist gewährleistet, dass die Greiflasche 16 bei montiertem Tragprofil 25 betätigbar ist.

Die Funktionsweise des erfindungsgemäßen Befestigungsklipps 10 wird im Folgenden anhand der Fig. 1 und 2 näher erläutert:
Zum Montieren des Tragprofils 25 an einer Gebäudewand unmittelbar unter einer Decke werden zunächst ein oder mehrere Befestigungsklipp(s) 10 derart an der Gebäudewand befestigt, dass die erste Haltelasche 14 der Decke zugewandt und die zweite Haltelasche 15 der Decke abgewandt angeordnet ist. Hierzu werden in an sich bekannter Weise Bohrlöcher in die Gebäudewand gebohrt und der Befestigungsklipp 10 mittels einer Schraube und unter Verwendung des Langlochs 18 an der Gebäudewand festgeschraubt. Hierbei kann das Langloch 18 dazu benutzt werden, Abweichungen bei der Herstellung des Bohrloches auszugleichen.

Nach erfolgter Befestigung des Befestigungsklipps 10 an der Gebäudewand wird das Tragprofil 25 zunächst in die untere zweite Haltelasche 15 eingeführt und abgelegt. In diesem Montagezustand wird das Gewicht des Tragprofils 25 bereits von dem Befestigungsklipp 10 getragen und aufgenommen. Ein Monteur muss nun lediglich ein Herausschwenken des Tragprofils 25 aus der zweiten Haltelasche 15 verhindern. Zur endgültigen Befestigung des Tragprofils 25 in dem Befestigungsklipp 10 erfolgt eine Verschwenkung des Tragprofils 25 um eine Drehachse im Bereich des Stegs 27, wobei der Steg 27 innerhalb des Bogenelementes 24 der zweiten Haltelasche 15 angeordnet ist.

Die Verdrehung erfolgt in Richtung auf den Befestigungsklipp 10 zu. Hierdurch kommt der Steg 26 zunächst in Kontakt mit der Gleitfläche 19. Bei einer weiteren Verdrehung gleitet der Steg 26 auf der Gleitfläche 19 in Richtung der Biegung 22 und schließlich über diese Biegung 22 in das Bogenelement 23 der ersten Haltelasche 14. Das Tragprofil 25 ist nunmehr in den Befestigungsklipp 10 eingeklippt.

Hierbei hintergreift der Vorsprung 21 den Steg 26 und fixiert somit das Tragprofil 25 zusätzlich. Zum Lösen des Tragprofils 25 aus dem Befestigungsklipp 10 wird die Greiflasche 16 derart betätigt, dass sich das Bogenelement 24 in einem öffnenden Sinne aufbiegt und hierdurch der Steg 27 des Tragprofils 25 aus der zweiten Haltelasche 15 entnommen werden kann. Sodann kann der Steg 26 aus der ersten Haltelasche 14 entnommen werden.

Alternativ zu dem vorgenannten Verfahren des Einklippens ist es möglich, das Tragprofil 25 derart einzuklippen, dass zunächst der Steg 26 in das Bogenelement 23 der ersten Haltelasche 14 eingeführt wird und sodann der Steg 27 in das Bogenelement 24 der zweiten Haltelasche 15 eingeklippt wird. Hierbei dient die Greiflasche 16 als eine Gleitfläche im Sinne der Gleitfläche 19. Zusätzlich oder alternativ ist es möglich, den Einrastvorgang zu erleichtern, indem die Greiflasche 16 derart betätigt wird, dass das Bogenelement 24 in einem öffnenden Sinne nach außen elastisch aufgebogen wird.

Somit ermöglicht der erfindungsgemäße Befestigungsklipp 10 die Montage einer Verschattungsanlage an einer Gebäudewand direkt unter einer Decke und unter Vermeidung eines sichtbaren Spaltes als auch andererseits eine erleichterte Montage, da das Tragprofil abhängig von den gegebenen Anforderungen und Umständen entweder zunächst in die erste Haltelasche 14 oder in die zweite Haltelasche 15 einführbar ist. Dies führt zu einer höheren Flexibilität und erleichterten Montage.

### Bezugszeichenliste :

- 10: Befestigungsklipp
- 11: Basis
- 12: erste Anlagefläche
- 13: zweite Anlagefläche
- 14: erste Haltelasche
- 15: zweite Haltelasche
- 16: Greiflasche
- 17: Sicke
- 18: Befestigungsöffnung
- 19: Einführunterstützung
- 20: Aussparung
- 21: Sicherungselement
- 22: Biegung
- 23: Bogenelement
- 24: Bogenelement
- 25: Tragprofil
- 26: Steg
- 27: Steg
- 28: Nut

## Patentansprüche

1. Befestigungsklipp für ein Tragprofil (25), insbesondere eine Rollokassette, einer Verschattungsanlage mit einer Basis (11) zum Anlegen an eine Befestigungsfläche, mit voneinander abgewandten Enden der Basis (11), denen Haltelaschen (14, 15) zum Erfassen des Tragprofils (25) zugeordnet sind, **dadurch gekennzeichnet, dass** die Basis (11) eine erste Anlagefläche (12) mit einer Befestigungsöffnung (18) und eine zweite Anlagefläche (13) aufweist, wobei eine erste Haltelasche (14) der ersten Anlagefläche (12) zugeordnet ist und eine zweite Haltelasche (15), die mit einer Greiflasche (16) versehen ist, der zweiten Anlagefläche (13) zugeordnet ist, und mit einer Sicke (17), die die erste Anlagefläche (12) mit der zweiten Anlagefläche (13) verbindet, wobei die erste Haltelasche (14) ein als Vorsprung, Widerhaken oder eine Nase ausgebildetes Sicherungselement (21) zum zusätzlichen Fixieren des Tragprofils (25) aufweist, und dass an der von der ersten Anlagefläche (12) abgewandten Seite der ersten Haltelasche (14) eine als schräg zur Basis (11) verlaufende Gleitfläche ausgebildete Einführunterstützung (19) für das Tragprofil (25) angeordnet ist.

2. Befestigungsklipp nach Anspruch 1, **dadurch gekennzeichnet, dass** der Bereich der zweiten Haltelasche (15) aufgrund der Sicke (17) im Vergleich zur ersten Haltelasche (14) elastischer gestaltet ist.

3. Befestigungsklipp nach Anspruch 1 oder 2, **dadurch gekennzeichnet, dass** das Sicherungselement (21) in einer Aussparung (20) der ersten Haltelasche (14) angeordnet ist.

4. Befestigungsklipp nach einem der vorhergehenden Ansprüche, **dadurch gekennzeichnet, dass** das Sicherungselement (21) einen Steg (26) des Tragprofils (25) hintergreift.

5. Befestigungsklipp nach einem der vorhergehenden Ansprüche, **dadurch gekennzeichnet, dass** die erste Haltelasche (14) über eine Biegung (22) in die, insbesondere nach außen oder innen gerichtete, Gleitfläche übergeht.

6. Befestigungsklipp nach einem der vorhergehenden Ansprüche, **dadurch gekennzeichnet, dass** die erste Haltelasche (14) und die zweite Haltelasche (15) das Tragprofil (25), insbesondere mittels eines Bogenelementes (23, 24), von außen oder innen erfassen.

7. Befestigungsklipp nach einem der vorhergehenden Ansprüche, **dadurch gekennzeichnet, dass** die erste Anlagefläche (12) und die zweite Anlagefläche (13) in der gleichen Ebene angeordnet sind.

8. Befestigungsklipp nach einem der vorhergehenden Ansprüche, **dadurch gekennzeichnet, dass** die erste Haltelasche (14) unmittelbar mit der Basis (11) verbunden ist.

9. Befestigungsklipp nach einem der vorhergehenden Ansprüche, **dadurch gekennzeichnet, dass** der Abstand zwischen der ersten Haltelasche (14) und der Sicke (17) größer, insbesondere etwa doppelt so groß, als der Abstand zwischen der Sicke (17) und der zweiten Haltelasche (15) ist.

10. Befestigungsklipp nach einem der vorhergehenden Ansprüche, **dadurch gekennzeichnet, dass** die Befestigungsöffnung (18) als ein Langloch ausgebildet ist.

11. Befestigungsklipp nach einem der vorhergehenden Ansprüche, **dadurch gekennzeichnet, dass** die Sicke (17) im Wesentlichen U-förmig ausgebildet ist.

12. Verschattungsanlage, insbesondere ein Rollo, mit einem Tragprofil (25), vorzugsweise einer Rollokassette, wobei das Tragprofil (25) mittels eines Befestigungsklipps (10) nach einem der Ansprüche 1 bis 11 an einer Gebäudefläche angebracht ist.

## Claims

1. Attachment clip for a support profile (25), in particular a roller blind headbox, of a shading unit with a base (11) for resting on an attachment surface, with ends of the base (11) facing away from one another, to which retaining tabs (14, 15) are attached for catching the support profile (25), **characterised in that** the base (11) possesses a first contact surface (12) with an attachment opening (18) and a second contact surface (13),
wherein a first retaining tab (14) is attached to the first contact surface (12) and a second retaining tab (15), equipped with a grip tab (16), is attached to the second contact surface (13), and with a corrugation (17) that connects the first contact surface (12) to the second contact surface (13), wherein the first retaining tab (14) possesses a retaining element (21) designed as a protrusion, barb or a projection to further immobilise the support profile (25), and that on the side of the first retaining tab (14) that faces away from the first contact surface (12) an insertion aid (19) for the support profile (25) is arranged and which is designed as a sliding surface that runs at an angle to the base (11).

2. Attachment clip according to claim 1, **characterised in that** the area of the second retaining tab (15), because of the corrugation (17), is designed to be more flexible than the first retaining tab (14).

3. Attachment clip according to claim 1 or 2, **characterised in that** the retaining element (21) is located in a recess (20) of the first retaining tab (14).

4. Attachment clip according to one of the preceding claims, **characterised in that** the retaining element (21) engages behind a bar (26) of the support profile (25).

5. Attachment clip according to one of the preceding claims, **characterised in that** the first retaining tab (14) transitions through a curve (22) into the sliding surface that in particular is oriented outwards or inwards.

6. Attachment clip according to one of the preceding claims, **characterised in that** the first retaining tab (14) and the second retaining tab (15) seize the support profile (25) from outside or inside, in particular by means of a curved element (23, 24).

7. Attachment clip according to one of the preceding claims, **characterised in that** the first contact surface (12) and the second contact surface (13) are arranged in the same plane.

8. Attachment clip according to one of the preceding claims, **characterised in that** the first retaining tab (14) is directly connected to the base (11).

9. Attachment clip according to one of the preceding claims, **characterised in that** the distance between the first retaining tab (14) and the corrugation (17) is greater, in particular twice that of the distance between the corrugation (17) and the second retaining tab (15).

10. Attachment clip according to one of the preceding claims, **characterised in that** the attachment opening (18) is designed as an oblong hole.

11. Attachment clip according to one of the preceding claims, **characterised in that** the corrugation (17) is essentially U-shaped.

12. Shading unit, in particular a roller blind, with a support profile (25), preferably for a roller blind headbox, wherein the support profile (25) is fixed on a building wall by means of an attachment clip (10) according to one of claims 1 to 11.

## Revendications

1. Clip de fixation pour un profil de support (25), en particulier un caisson de store, une installation brise-soleil à une base (11) pour le placement à une surface d'attache, comprenant des extrémités opposées l'une à l'autre de ladite base (11), aux pattes de retenue (14, 15) étant affectées auxdites extrémités afin de saisir ledit profil de support (25), **caractérisé en ce que** ladite base (11) comprend une première surface d'appui (12) à une ouverture de fixation (18) et une deuxième surface d'appui (13), dans lequel une première patte de retenue (14) est affectée à ladite première surface d'appui (12) et une deuxième patte de retenue (15), qui est pourvue d'une patte de préhension (16), est affectée à ladite deuxième surface d'appui (13), et à une moulure (17), qui relie ladite première surface d'appui (12) à ladite deuxième surface d'appui (13), à ladite première patte de retenue (14) comprenant un élément d'arrêt (21) configuré sous forme d'une saillie, d'une barbelure ou d'un nez pour la fixation supplémentaire dudit profil de support (25), et **en ce qu'**une aide d'introduction (19) pour ledit profil de support (25) est disposée au côté de ladite première patte de retenue (14), qui est opposé à ladite première surface d'appui (12), ladite aide étant configurée sous forme d'une surface de glissement s'étendent en biais pas rapport à ladite base (11).

2. Clip de fixation selon la revendication 1, **caractérisé en ce que**, grâce à ladite moulure (17), la zone de ladite deuxième patte de retenue (15) a une formation plus élastique, comparé devant ladite première patte de retenue (14).

3. Clip de fixation selon la revendication 1 ou 2, **caractérisé en ce que** ledit élément d'arrêt (21) est disposé dans un évidement (20) de ladite première patte de retenue (14).

4. Clip de fixation selon une quelconque des revendications précédentes, **caractérisé en ce que** ledit élément d'arrêt (21) s'engage derrière une traverse (26) dudit profil de support (25).

5. Clip de fixation selon une quelconque des revendications précédentes, **caractérisé en ce que** ladite première patte de retenue (14) passe via une pliure (22) dans ladite surface de glissement, qui est dirigée, en particulier, vers l'extérieur ou vers l'intérieur.

6. Clip de fixation selon une quelconque des revendications précédentes, **caractérisé en ce que** ladite première patte de retenue (14) et ladite deuxième patte de retenue (15) saisissent ledit profil de support (25), en particulier moyennant un élément en arc (23, 24), de l'extérieur ou de l'intérieur.

7. Clip de fixation selon une quelconque des revendications précédentes, **caractérisé en ce que** ladite première surface d'appui (12) et ladite deuxième surface d'appui (13) sont disposées dans le même plan.

8. Clip de fixation selon une quelconque des revendications précédentes, **caractérisé en ce que** ladite première patte de retenue (14) est reliée directement à ladite base (11).

9. Clip de fixation selon une quelconque des revendications précédentes, **caractérisé en ce que** la distance entre ladite première patte de retenue (14) et ladite moulure (17) est plus grande, en particulier à deux fois la grandeur environ, que la distance entre ladite moulure (17) et ladite deuxième patte de retenue (15).

10. Clip de fixation selon une quelconque des revendications précédentes, **caractérisé en ce que** ladite ouverture de fixation (18) est configurée en tant que trou allongé.

11. Clip de fixation selon une quelconque des revendications précédentes, **caractérisé en ce que** ladite moulure (17) a une configuration essentiellement en U.

12. Installation brise-soleil, en particulier un store, à un profil de support (25), de préférence d'un caisson de store, dans laquelle ledit profil de support (25) est monté à une surface d'un bâtiment moyennant un clip de fixation (10) selon une quelconque des revendications 1 à 11.
